# EUROPÄISCHE PATENTSCHRIFT

(11) **EP 3 243 693 B1**
(45) Veröffentlichungstag und Bekanntmachung des Hinweises auf die Patenterteilung: **26.07.2023**
(21) Anmeldenummer: 17169560.4
(22) Anmeldetag: 04.05.2017
(51) Int. Cl.: B60L 58/21

(54) **ENERGIESPEICHERSYSTEM EINES KRAFTFAHRZEUGS UND BETRIEBSVERFAHREN HIERFÜR UND KRAFTFAHRZEUG**
ENERGY STORAGE SYSTEM OF A MOTOR VEHICLE AND OPERATING METHOD FOR SAME AND MOTOR VEHICLE
SYSTÈME D'ACCUMULATEUR D'ÉNERGIE D'UN VÉHICULE AUTOMOBILE ET SON PROCÉDÉ DE FONCTIONNEMENT ET VÉHICULE AUTOMOBILE

(30) Priorität: 13.05.2016 DE 102016005960
(43) Veröffentlichungstag der Anmeldung: 15.11.2017
(73) Patentinhaber: MAN Truck & Bus SE, 80995 München (DE)
(72) Erfinder: Braun, Reimar, 81735 München (DE)
(74) Vertreter: v. Bezold & Partner Patentanwälte - PartG mbB

(56) Entgegenhaltungen:
- EP-A1- 2 117 106
- EP-A1- 2 439 098
- EP-A2- 2 204 874
- WO-A2-2011/163244
- WO-A2-2012/078721
- JP-A- 2014 230 332
- US-A1- 2005 043 859
- US-A1- 2009 102 424
- US-A1- 2012 038 324
- US-A1- 2014 028 098

## Beschreibung

Die Erfindung betrifft ein Energiespeichersystem eines Kraftfahrzeugs und ein Betriebsverfahren für einen derartigen Energiespeicher.

Kraftfahrzeuge mit elektrischem Antrieb, sogenannte Elektrofahrzeuge oder auch Hybridfahrzeuge, verfügen über ein leistungsfähiges elektrisches Energiespeichersystem zur Speicherung und Bereitstellung elektrischer Energie für den elektrischen Antrieb und ggf. weiterer Komponenten. Aus dem Stand der Technik ist bekannt, derartige Energiespeichersysteme modular aus mehreren einzelnen elektrischen Energiespeichern, z. B. in Form von Batteriepacks, aufzubauen. Jeder elektrische Energiespeicher des Energiespeichersystems kann hierbei beispielsweise eine eigene Energiespeichersteuerung und mehrere parallel und/oder seriell miteinander verschaltete und zu einem Zellenverbund zusammengefasste Einzelzellen aufweisen. Ferner ist bekannt, den modularen Aufbau des Energiespeichersystems so ausführen, dass die einzelnen Energiespeicher gemäß dem Master-Slave-Prinzip miteinander gekoppelt sind (vgl. David Andrea, Battery Management Systems for Large Lithium Battery Packs, Artech House Publishers, Ausgabe 30. September 2010, Kapitel 2.3.3).

Beispielsweise offenbart die EP 2 204 874 A2 ein derartiges System aus mehreren gekoppelten Energiespeichern, die jeweils über Batteriezellen und zugehörige Steuerungen verfügen sowie über ein Datenbussystem miteinander in Verbindung stehen. Jeder der Energiespeicher kann in einem Master- oder Slavemodus betrieben werden, wobei sich die beiden Betriebsarten dahingehend unterscheiden, ob die Steuerungen aktiv Daten versenden oder lediglich passiv Daten empfangen können. Nachteilig an der dort offenbarten Lösung ist allerdings, dass die verschiedenen Modi während des Betriebs nicht verändert werden können und damit das System nicht an sich verändernde Betriebsbedingungen angepasst werden kann.

Daneben offenbart die Offenlegungsschrift EP 2 117 106 A1 ein Energiespeichersystem umfassend zwei Energiespeicher sowie zwei den jeweiligen Energiespeichern zugeordnete Spannungswandler. Während die beiden Spannungswandler in Form einer Master-Slave-Architektur ausgeführt sind, werden die beiden Energiespeicher von einer zentralen Steuereinheit überwacht. Damit können zwar Fehlzustände im System, die nicht die zentrale Energiespeichersteuerung betreffen, teilweise durch ein Anpassen der Betriebsweise der Spannungswandler kompensiert werden, allerdings kann der Betrieb bei einem Ausfall der Steuereinheit nicht aufrechterhalten werden.

Ferner ist aus der DE 10 2009 020 178 A1 ein System zum Speichern von Energie bekannt, das einen ersten Energiespeicher mit einer ersten Steuereinheit zum Steuern des Betriebs und Überwachen des Zustands des ersten Energiespeichers, einen zweiten Energiespeicher mit einer zweiten Steuereinheit zum Steuern des Betriebs und Überwachen des Zustands des zweiten Energiespeichers und eine übergeordnete Steuereinheit zum Steuern des Betriebs und Überwachen des Zustands einer Gesamtheit von Energiespeichern, welche den ersten Energiespeicher und den zweiten Energiespeicher umfasst, aufweist. Das Energiesystem ist nach dem Prinzip eines Master-Slave-Systems aufgebaut, wobei der zweite Energiespeicher und gegebenenfalls weitere Energiespeicher dem ersten Energiespeicher untergeordnet sind. Nachteilig bei dieser Lösung ist, dass das System einen Ausfall oder eine Fehlfunktion der übergeordneten Steuereinheit, d. h. der Mastereinheit, nicht kompensieren kann und in diesem Falle nicht mehr funktionsfähig ist.

Ähnliche Master-Slave-Systeme finden sich auch in der US 2014/028098 A1, JP 2014 230332 A, US 2009/102424 A1 und US 2005/0043859 A1.

Es ist somit eine Aufgabe der Erfindung, ein verbessertes Energiespeichersystem bereitzustellen, mit dem Nachteile herkömmlicher Techniken vermieden werden können. Die Aufgabe der Erfindung ist es insbesondere, ein verbessertes Energiespeichersystem bereitzustellen, bei dem Fehlfunktionen und Ausfälle einzelner Energiespeicher des Systems, insbesondere der Master-Steuereinrichtung, besser kompensiert werden können. Eine weitere Aufgabe ist es, ein Betriebsverfahren für ein Energiespeichersystem bereitzustellen, mit dem Nachteile herkömmlicher Betriebsverfahren vermieden werden können.

Diese Aufgaben werden durch ein Energiespeichersystem und ein Betriebsverfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Betriebsverfahren für ein Energiespeichersystem eines Kraftfahrzeugs bereitgestellt. Das Kraftfahrzeug kann ein Nutzfahrzeug sein. Das Energiespeichersystem weist mehrere elektrische Energiespeicher auf. Jeder der Energiespeicher kann mehrere parallel und/oder seriell miteinander verschaltete und zu einem Zellenverbund zusammengefasste Einzelzellen aufweisen. Jeder der Energiespeicher umfasst eine Energiespeichersteuereinrichtung zum Steuern des Betriebs und Überwachen des Zustands des jeweiligen Energiespeichers, wobei die Energiespeichersteuereinrichtungen nach dem Master-Slave-Prinzip miteinander gekoppelt sind. Unter einer Kopplung nach dem Master-Slave-Prinzip wird verstanden, dass eine der Energiespeichersteuereinrichtungen als übergeordnete Steuereinrichtung ausgeführt ist, die zum Steuern des Betriebs und Überwachen des Zustands des Energiespeichersystems, welches die Gesamtheit der mehreren elektrischen Energiespeicher umfasst, eingerichtet ist. Diese übergeordnete Steuereinrichtung wird als Master-Steuereinrichtung bezeichnet. Die restlichen Energiespeichersteuereinrichtungen sind dementsprechend als Slave-Steuereinrichtungen eingerichtet, d. h., sie sind eingerichtet, jeweils Daten, z. B. Signale, zu mindestens einem Betriebszustand ihres zugeordneten Energiespeichers an die Master-Steuereinrichtung weiterleiten und Steuersignale von der Master-Steuereinrichtung empfangen. Die Master-Steuereinrichtung ist ferner ausgeführt, jeweils Daten zu mindestens einem Betriebszustand der Slave-Steuereinrichtungen von diesen zu empfangen. Die Master-Steuereinrichtung ist somit dazu ausgebildet, die Signale von den Energiespeichersteuerungen zu erhalten, die erhaltenen Signale zu einem Systemsignal des Energiespeichersystems zu aggregieren und das Systemsignal auszugeben. Die Energiespeichersteuereinrichtungen sind zur Kommunikation über einen Bus, insbesondere einen seriellen Datenbus, z. B. einem CAN-Bus (Controller Area Network (CAN)-Bus), miteinander verbunden.

Die mehreren Energiespeicher, welche mit ihrer Steuereinrichtung jeweils eine eigene "Intelligenz" aufweisen, können mittels der übergeordneten Steuereinrichtung (Master-Steuereinrichtung) zu einem Gesamtsystem zusammengeschaltet werden. Die durch die jeweilige Steuereinrichtung bereitgestellte individuelle "Intelligenz" der einzelnen Energiespeicher kann auch dafür ausgenutzt werden, dass der jeweilige Energiespeicher auch alleine zum Speichern und/oder zum Abgeben von elektrischer Energie betrieben werden könnte. Insbesondere ist jeder der Energiespeicher eigensicher ausgelegt. Gemäß dem Master-Slave-Prinzip sind jedoch die zumindest zwei Energiespeicher derart zusammengeschaltet, dass das Energiespeichersystem nach außen hin als ein Energiespeichersystem mit einer entsprechend hohen Leistung erscheint. Dabei können bevorzugt alle Funktionalitäten, welche die individuellen Steuereinrichtungen für die einzelnen Energiespeicher bereitstellen, von der Master-Steuereinrichtung in entsprechender Weise für das gesamte Energiespeichersystem bereitgestellt werden.

Abhängig von der gewünschten Gesamtleistung kann im Prinzip eine beliebige Anzahl derartiger Energiespeicher zu dem beschriebenen Energiespeichersystem zusammengeschaltet werden. Durch den beschrieben modularen Aufbau kann das Energiespeichersystem für eine Vielzahl von verschiedenen Leistungsklassen optimal ausgelegt werden. Durch den modularen Aufbau kann das beschriebene Energiespeichersystem besonders leistungsstark ausgelegt werden und zudem in der Handhabung sehr sicher sein.

Ein besonderer Aspekt der Erfindung liegt darin, dass die Funktionalität einer Master-Steuerung in zumindest zwei, beispielsweise in drei der Energiespeichereinheiten implementiert ist und jeweils zur Ausführung aktivierbar und deaktivierbar ist. Die Master-Funktionalität wird somit in anderen Energiespeichern gespiegelt. Eine solche Funktionalität kann in Form einer Software programmtechnisch vorab in den Steuereinrichtungen installiert sein, so dass bei Aktivierung der entsprechenden Master-Softwarekomponente die Steuereinrichtung des jeweiligen Energiespeichers als Master-Steuereinrichtung initialisiert wird. Bei Aktivierung der Master-Funktionalität bleibt die entsprechende Slave-Softwarekomponente deaktiviert. Wird dagegen die Slave-Softwarekomponente aktiviert und bleibt die Master-Softwarekomponente deaktiviert, wird die entsprechende Steuereinrichtung als Slave-Steuereinrichtung initialisiert. In einem eigensicheren Betriebsmodus des jeweiligen Energiespeichers ist sowohl die Master- als auch die Slave-Funktionalität deaktiviert. Besonders vorteilhaft ist hierbei, wenn die Funktionalität einer Master-Steuerung und die einer Slave-Steuereinrichtung in allen Energiespeichern des Energiespeichersystems implementiert ist und jeweils zur Ausführung aktivierbar und deaktivierbar ist.

Das Betriebsverfahren zum Betrieb des Energiespeichersystems umfasst den Schritt des Überwachens eines Betriebs der Master-Steuereinrichtung und das Aktivieren einer der Slave-Steuereinrichtungen, in der die Funktionalität der Master-Steuerung implementiert ist, als neue Master-Steuereinrichtung, falls die Überwachung ergibt, dass die Master-Steuereinrichtung nicht mehr ordnungsgemäß arbeitet. Die bisherige Master-Steuereinrichtung wird dabei deaktiviert.

Eine Steuereinrichtung eines Energiespeichers, die bisher als Slave-Einheit fungiert, wird somit bei einer Fehlfunktion der bisherigen Master-Steuereinrichtung als neue Master-Steuereinrichtung initialisiert. Hierzu wird ihre vorab installierte Master-Funktionalität aktiviert.

Dies bietet den Vorteil, dass ein Ausfall der Master-Steuereinrichtung kompensiert werden kann. Somit kann selbst bei einem Ausfall desjenigen Energiespeichers, dessen Steuereinrichtung bisher als Master-Steuereinheit fungierte, oder selbst bei Ausfall mehrerer Energiespeicher der Betrieb eines Energiespeichersystems, bestehend aus einer noch ordnungsgemäß funktionierenden Teilmenge der Energiespeicher, aufrechterhalten werden.

Ein weiterer Vorteil ist ferner, dass mit dem Betriebsverfahren auch eine temporäre Störung einer oder mehrerer Slave-Einheiten kompensiert werden kann. Bei einer temporären Störung einer oder mehrerer Slave-Einheiten verhalten sich die Batterieeinheiten im Allgemeinen eigensicher und werden mit einer Abschaltkaskade heruntergefahren. Die Master-Steuereinrichtung kann in diesem Fall in einem Notfallmodus den Fahrbetrieb übernehmen (sog. Limp-Home-Modus). Selbst wenn zu einem späteren Zeitpunkt die Slave-Einheiten wieder funktionsfähig wären, könnten diese durch die bisherige Master-Steuereinrichtung nicht mehr zugeschaltet werden, da die Master-Steuereinrichtung aufgrund des Betriebs im Limp-Home-Modus in der Regel eine Spannungslage aufweist, die stark von der Spannungslage der Slave-Steuereinrichtungen abweicht. Eine Zuschaltung einzelner Systeme zur Master-Steuereinrichtung ist in der Regel nur möglich, wenn alle Systeme sich innerhalb eines vorbestimmten engen Bereichs der Spannungslage befinden, zumindest dann, wenn kein DC/DC-Wandler zum Einsatz kommen soll. Erfindungsgemäß kann in diesem Fall durch Deaktivierung der bisherigen Steuereinrichtung und Aktivierung einer Steuereinrichtung, die bisher als Slave-Steuereinrichtung eingerichtet war, als neue Master-Steuereinrichtung wieder ein funktionsfähiges Energiespeichersystem zumindest mit einer Teilmenge der Energiespeicher bereitgestellt werden.

Ferner sind diejenigen als Slave-Steuereinrichtungen eingerichteten Steuereinrichtungen, in denen die Funktionalität einer Master-Steuerung implementiert, aber deaktiviert ist, eingerichtet, Signale für die und/oder von der Master-Steuereinrichtung mitzulesen.

Vorstehend wurde bereits erwähnt, dass die Energiespeichersteuereinrichtungen über einen Bus, beispielsweise einen CAN-Bus, miteinander verbunden sind. Unter einem Mitlesen wird in diesem Zusammenhang verstanden, dass auch diejenigen Steuereinrichtungen, die aktuell als Slave-Einheit fungieren, aber prinzipiell als Master-Steuereinrichtung initialisiert werden könnten, von dem Bus diejenigen Daten oder Nachrichten, die für die Master-Steuereinrichtung bestimmt sind und/oder diejenigen Daten oder Nachrichten, die von der Master-Steuereinrichtung auf den Bus gelegt werden, überwachen bzw. empfangen. Dies bietet den Vorteil, dass bei Ausfall der bisherigen Master-Steuereinrichtung die Steuereinrichtung, die anschließend die Master-Funktionalität übernehmen soll, bereits aktuelle Betriebsdaten des Energiespeichersystems hat, um eine möglichst gute Übergabe der Rolle als Master-Steuereinrichtung zu ermöglichen.

Das Mitlesen der vom Master auf den Bus gelegten Daten oder Nachrichten bietet ferner den Vorteil, dass eine Fehlfunktion der bisherigen Master-Steuereinrichtung schnell erkannt werden kann. Beispielsweise kann die Master-Steuereinrichtung ausgebildet sein, bei Auftreten einer Fehlfunktion eine Fehlernachricht auf den Bus zu legen. Diese Fehlernachricht wird dann durch das Mitlesen erkannt. Ist die Bus-Kommunikation der Master-Steuereinrichtung unterbrochen, kann dies ebenfalls durch das Mitlesen der Slave-Einheiten erkannt werden, nämlich durch Ausbleiben der Daten oder Nachrichten der Master-Steuereinrichtung.

Eine Fehlfunktion der Master-Steuereinrichtung, d. h. eine Situation, in der die Master-Steuereinrichtung nicht mehr ordnungsgemäß arbeitet, kann dadurch festgestellt werden, dass im Betrieb des Energiespeichersystems zumindest eine der folgenden Bedingungen vorliegt:
Eine Fehlfunktion der Master-Steuereinrichtung kann erkannt werden, wenn die Master-Steuereinrichtung eine vorbestimmte Fehlermeldung oder Defekt-Meldung auf den Bus, beispielsweise den CAN-Bus, ausgibt, über den die Energiespeichersteuereinrichtungen miteinander verbunden sind. Alternativ oder zusätzlich kann eine Fehlfunktion erkannt werden, wenn die Slave-Steuereinrichtungen länger als eine vorbestimmte Zeit keine Steuersignale von der Master-Steuereinrichtung erhalten. Alternativ oder zusätzlich kann eine Fehlfunktion erkannt werden, wenn die Master-Steuereinrichtung länger als eine vorbestimmte Zeit keine Ausgabedaten betreffend den Zustand des Energiespeichersystems ausgibt, die beispielsweise über eine Schnittstelle an das Funktionsnetz des Fahrzeugs übertragen werden. Eine Überwachung des Betriebs der Master-Steuereinrichtung kann somit eine fortlaufende Prüfung umfassen, ob eine der vorgenannten Bedingungen vorliegt.

Im Rahmen der Erfindung besteht die Möglichkeit, dass diejenige Slave-Steuereinrichtung, die nach der Erfüllung der Überwachungsbedingung als neue Master-Steuereinrichtung aktiviert wird, gemäß einer vorbestimmten Reihenfolge oder vorbestimmten Kriterien aus den Slave-Steuereinrichtungen, in denen die Funktionalität der Master-Steuerung ebenfalls implementiert, jedoch noch nicht deaktiviert ist, ausgewählt wird. Beispielsweise kann den Steuereinrichtungen vorab jeweils eine feste Nummer oder Priorisierung zugeordnet werden. Fällt nun die bisherige Master-Steuereinrichtung aus, kann gemäß der Rangfolge der zugeordneten Nummer oder Priorisierung eine neue Steuereinrichtung, die bisher als Slave-Steuereinrichtung diente, ausgewählt werden und als neue Master-Steuereinrichtung aktiviert werden.

Es ist ferner vorteilhaft, wenn vor oder im Rahmen der Auswahl einer Slave-Steuereinrichtung als die neue Master-Steuereinrichtung geprüft wird, ob eine Kommunikation dieser Slave-Steuereinrichtung mit einem Datenbus, der die Energiespeichersteuereinrichtungen miteinander verbindet, fehlerfrei funktioniert. Dadurch kann vermieden werden, dass eine Slave-Steuereinrichtung, deren Buskommunikation nicht mehr ordnungsgemäß funktioniert, als Master-Steuereinheit ausgewählt wird.

Gemäß einer weiteren bevorzugten Ausführungsform wird, falls die ausgewählte Slave-Steuereinrichtung nicht erfolgreich als neue Master-Steuereinrichtung aktiviert werden konnte, eine weitere Slave-Steuereinrichtung gemäß der vorbestimmten Reihenfolge zur Aktivierung als neue Master-Steuereinrichtung ausgewählt. Vorzugsweise wird so lange versucht, eine der bisherigen Slave-Steuereinrichtungen als neue Master-Steuereinrichtungen zu aktivieren, bis eine Aktivierung erfolgreich durchgeführt werden konnte.

Falls nach Erfüllung einer Überwachungsbedingung jedoch keine der Slave-Steuereinrichtungen als Master-Steuereinrichtung aktivierbar ist, beispielsweise aufgrund eines Problems in der Bus-Kommunikation, von dem alle Energiespeicher betroffen sind, dann können gemäß einem weiteren Aspekt der Erfindung alle bis auf einen Energiespeicher deaktiviert werden. Der nicht deaktivierte Energiespeicher, vorzugsweise ein Energiespeicher, der bisher als Slave-Steuereinrichtung fungiert hat, kann dann für einen Notlaufmodus (sog. Limp-Home-Modus) genutzt werden, so dass das Fahrzeug zumindest mit verminderter Batterieleistung bewegt werden kann.

Die Energiespeicher des Energiespeichersystems können baugleich ausgeführt sein. Ferner können die Energiespeicher jeweils ein Energiespeichergehäuse aufweisen, in dem die mehreren parallel und/oder seriell miteinander verschalteten und zu einem Zellenverbund zusammengefassten Einzelzellen und die Energiespeichersteuerung angeordnet sind.

Ferner kann der Zellenverbund des Energiespeichers in an sich bekannter Weise mehrere Zellmodule aufweisen, wobei jedes der Zellmodule mehrere Speicherzellen und eine Zellmodulsteuerung umfasst. Jede der Zellmodulsteuerungen kann dazu ausgebildet sein, dass die Speicherzellen im jeweiligen Zellmodul betreffende Messwerte an die Steuereinrichtung des Energiespeichers ausgeben. Die Energiespeichersteuerung kann dazu ausgebildet sein, die Messwerte von den Zellmodulen im jeweiligen Energiespeicher zu erhalten und abhängig von den erhaltenen Messwerten ein Signal und/oder Ausgabedaten zu erzeugen, das und/oder die einen Betriebszustand (Ladezustand, Temperatur, Stromgrenzen etc.) des Energiespeichers charakterisieren. Die einzelnen Energiespeicher können jeweils als Batteriepacks ausgeführt sein und/oder eine Vielzahl von parallel und/oder in Reihe verschalteten Lithium-Ionen-Akkumulatoren aufweisen.

Das Energiespeichersystem kann eine Schnittstelle zu einem Fahrzeugbus, z. B. dem Fahrzeug-CAN-Bus, aufweisen, nachfolgend auch als Fahrzeugschnittstelle bezeichnet, über die das Energiespeichersystem das Systemsignal, das aus den Signalen von den einzelnen Energiespeichersteuerungen aggregiert wurde, ausgibt.

Betreffend die Bus-Architektur kann eine Realisierungsmöglichkeit vorsehen, dass die Steuereinrichtungen der Energiespeicher des Energiespeichersystems alle eine eigene Schnittstelle zu dem Fahrzeug-Bus aufweisen. Mit anderen Worten sind in diesem Falle alle Energiespeichersteuerungen direkt an den Fahrzeug-Bus angeschlossen, an den die aggregierten Systemsignale der Master-Steuereinheit auszugegeben werden und über den Systemanfragen betreffend das Energiespeichersystem, beispielsweise von einer Steuerung des elektrischen Antriebs, gesendet werden.

Eine weitere Variante dieser Realisierungsmöglichkeit kann vorsehen, dass die einzelnen, Steuereinrichtungen der Energiespeicher untereinander zusätzlich über einen separaten Bus, insbesondere einen separaten CAN-Bus, gekoppelt sind, damit die Kommunikation zwischen Energiespeichersteuereinrichtungen nicht über den zentralen Fahrzeugbus abgewickelt werden muss.

Eine weitere Realisierungsmöglichkeit der Bus-Architektur kann vorsehen, dass nur die Steuereinrichtung eines vorbestimmten Energiespeichers des Energiespeichersystems eine Schnittstelle zum Fahrzeug-Bus aufweist, und zwar diejenige Steuereinrichtung, die im Normalbetrieb zuerst als Master-Steuereinrichtung aktiviert wird. Die einzelnen Energiespeicher des Energiespeichers sind untereinander über einen separaten Bus gekoppelt, an den ihre Steuereinrichtungen angeschlossen sind. Bei dieser Ausführungsvariante ist die Master-Steuereinrichtung ausgeführt, auch im Falle einer Deaktivierung als Master-Steuereinrichtung, Daten für das Energiesystem von dem Fahrzeugbus über die zentrale Fahrzeugschnittstelle an den Datenbus, der die einzelnen Steuereinrichtungen der Energiespeicher untereinander verbindet, weiterzuleiten und Daten von diesem Datenbus an den Fahrzeugbus weiterzuleiten.

Ferner wird neben dem Betriebsverfahren auch Schutz für den Gegenstand eines Energiespeichersystems per se beansprucht, das ausgeführt ist, das Betriebsverfahren durchzuführen.

Gemäß einem zweiten Gesichtspunkt der Erfindung wird somit ein Energiespeichersystem für ein Kraftfahrzeugs bereitgestellt. Das Energiespeichersystem ist wie vorstehend beschrieben ausgeführt. So umfasst das Energiespeichersystem mehrere elektrische Energiespeicher, wobei jeder der Energiespeicher eine Energiespeichersteuereinrichtung zum Steuern des Betriebs und Überwachen des Zustands des jeweiligen Energiespeichers aufweist. Die Energiespeichersteuereinrichtungen sind nach dem Master-Slave-Prinzip miteinander gekoppelt. Das Energiespeichersystem ist ausgeführt, nach Erfüllung einer Überwachungsbedingung, die angibt, dass die Master-Steuereinrichtung nicht mehr ordnungsgemäß arbeitet, eine der Slave-Steuereinrichtungen, in der die Funktionalität der Master-Steuerung implementiert ist, als neue Master-Steuereinrichtung zu aktivieren.

Zur Vermeidung von Wiederholungen sollen rein verfahrensgemäß offenbarte Merkmale auch als vorrichtungsgemäß offenbart gelten und beanspruchbar sein. Die vorgenannten Aspekte und erfindungsgemäßen Merkmale, insbesondere im Hinblick auf die Ausbildung des Energiespeichersystems, gelten somit auch für den Vorrichtungsanspruch auf ein Energiespeichersystem. Ferner ist das Energiespeichersystem ausgebildet, das Betriebsverfahren wie in diesem Dokument beschrieben auszuführen. Die Funktionalität zur Überwachung der aktuellen Master-Steuereinrichtung und zur Einleitung der Deaktivierung und Aktivierung von Master- und Slave-Steuereinrichtungen kann hierbei entweder in einer zentralen Steuereinheit des Energiespeichersystems bereitgestellt werden oder dezentral in den einzelnen Steuereinrichtungen der Energiespeicher bereitgestellt werden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Blockschaltbild eines ersten Ausführungsbeispiels eines Ener-giespeichersystems für ein Nutzfahrzeug;
- Figur 2: ein Ablaufdiagramm zur Illustration eines Betriebsverfahrens gemäß einem Ausführungsbeispiel;
- Figur 3: ein schematisches Blockschaltbild des Ausführungsbeispiels der Figur 1 nach Aktivierung einer neuen Master-Steuereinrichtung;
- Figur 4: ein schematisches Blockschaltbild eines zweiten Ausführungsbeispiels eines Energiespeichersystems für ein Nutzfahrzeug; und
- Figur 5: ein schematisches Blockschaltbild des Ausführungsbeispiels der Figur 4 nach Aktivierung einer neuen Master-Steuereinrichtung.

Gleiche oder funktional äquivalente Elemente sind in allen Figuren mit denselben Bezugszeichen bezeichnet.

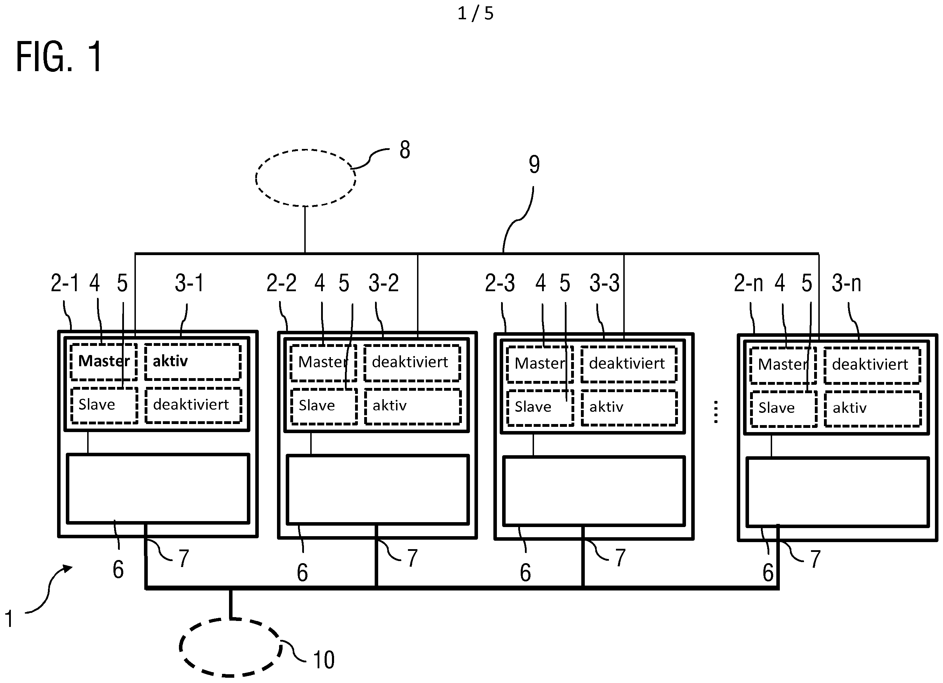

Figur 1 zeigt ein schematisches Blockschaltbild eines allgemein mit dem Bezugszeichen 1 bezeichneten Energiespeichersystems für ein Nutzfahrzeug. Das Energiespeichersystem 1 dient als Traktionsenergiespeichersystem, d. h. zur Speicherung und Bereitstellung elektrischer Energie für einen elektrischen Antrieb und ggf. weiterer Komponenten eines zumindest teilweise elektrisch antreibbaren Nutzfahrzeugs. Das Energiespeichersystem 1 umfasst mehrere, mindestens drei Energiespeicher 2. Jeder Energiespeicher 2 umfasst jeweils mehrere parallel und/oder seriell miteinander verschaltete und zu einem Zellenverbund 6 zusammengefasste Einzelzellen und eine Energiespeichersteuerung 3. Zur Unterscheidung der n Energiespeicher 2 des Energiespeichersystems 1 sind diese mit den Bezugszeichen 2-1, 2-2, 2-3 und 2-n bezeichnet. Entsprechend sind die Energiespeichersteuerungen 3 gekennzeichnet, so dass das Bezugszeichen 3-1 die Steuereinrichtung des Energiespeichers 2-1 bezeichnet.

Jede der Energiespeichersteuerungen 3 ist dazu ausgebildet, Messwerte von dem Zellenverbund 6 im jeweiligen Energiespeicher 2 zu erhalten. Jede der Energiespeichersteuerungen 3 ist ferner dazu ausgebildet, abhängig von den erhaltenen Messwerten ein Signal zu erzeugen. Zur Ausgabe des Signals oder anderer Signale ist die Energiespeichersteuerung 3 mit einem Fahrzeug-CAN-Bus 9 verbunden.

Die Energiespeichersteuereinrichtungen 3-1, 3-2, 3-3, 3-n der elektrischen Energiespeicher 2-1, 2-2, 2-3, 2-n sind nach dem Master-Slave-Prinzip miteinander gekoppelt. Im Betriebszustand, der in Figur 1 gezeigt ist, ist die Energiespeichersteuereinrichtung 3-1 des ersten Energiespeichers 2-1 als Master-Steuereinrichtung aktiviert, während die anderen Steuereinrichtungen 3-2, 3-3, 3-n jeweils als Slave-Steuereinrichtung aktiviert sind. Die Master-Steuereinrichtung 3-1 ist zum Steuern des Betriebs und Überwachen des Zustands des Energiespeichersystems 1, welches die Gesamtheit der mehreren elektrischen Energiespeicher 2-1, 2-2, 2-3, 2-n umfasst, eingerichtet. Hierbei ist die die Master-Steuereinrichtung 3-1 ausgeführt, jeweils Daten zu mindestens einem Betriebszustand von den Slave-Steuereinrichtungen 3-2, 3-3, 3-n zu empfangen und Steuersignale für diese abzusetzen. Die Slave-Steuereinrichtungen 3-2, 3-3, 3-n sind dagegen eingerichtet, jeweils Daten zu mindestens einem Betriebszustand ihres zugeordneten Energiespeichers an die Master-Steuereinrichtung 3-1 über den CAN-Bus 9 weiterzuleiten und Steuersignale von der Master-Steuereinrichtung 3-1 über den CAN-Bus 9 zu empfangen.

Die Master-Steuereinrichtung 3-1 ist über eine Fahrzeugschnittstelle zur bidirektionalen Kommunikation mit einem Funktionsnetz 8, insbesondere mit einer Steuerung des elektrischen Antriebs, verbunden. Die Master-Steuereinrichtung 3-1 aggregiert die Signale von den Slave-Steuereinrichtungen inkl. ihrer internen Signale betreffend den Betriebszustand ihres Zellenverbunds 6 und gibt das aggregierte Signal als ein Systemsignal des Energiespeichersystems aus. Dieses Systemsignal charakterisiert den Betriebszustand des Energiespeichersystems 1 und kann Angaben zu Ladezustand, Temperatur, Stromgrenzen und weiteren Betriebsparametern des Energiespeichersystems 1 enthalten. Das Systemsignal wird dann über die Fahrzeugschnittstelle über den CAN-Bus 9 an das Funktionsnetz, insbesondere an eine Steuerung des elektrischen Antriebs des Fahrzeugs, übermittelt. Das Funktionsnetz 8 kann ein Niederspannungsbordnetz und/oder ein Bus-System zur Kommunikation zwischen Fahrzeugfunktionen umfassen.

Entsprechend empfängt die Master-Steuereinrichtung 3-1 von dem Funktionsnetz 8 oder der Steuerung des elektrischen Antriebs Signale, z. B. Anfragen zum Betriebszustand des Energiespeichersystems 1.

Die Energiespeicher 2 sind baugleich ausgeführt. Dies bedeutet insbesondere, dass in jedem der Energiespeichers 2-1, 2-2, 2-3, 2-n, insbesondere in jeder der Steuereinrichtungen 3-1, 3-2, 3-3, 3-n, sowohl die Funktionalität 4 einer Master-Steuerung als auch die Funktionalität 5 einer Slave-Steuerung in Form einer entsprechenden Steuersoftware implementiert ist und jeweils zur Ausführung aktivierbar und deaktivierbar ist. Im Zustand des Energiespeichersystems 1, der in Figur 1 dargestellt ist, ist die Master-Funktionalität nur im ersten Energiespeicher 2-1 aktiviert und in den anderen Energiespeichern deaktiviert. Entsprechend hierzu ist die Slave-Funktionalität im ersten Energiespeicher 2-1 deaktiviert und in den anderen Energiespeichern 2-2, 2-3, 2-n aktiviert.

Die aus dem Zellenverbund 6 jedes Energiespeichers 2 resultierenden Pole bilden eine Hochvoltschnittstelle 7. Die Hochvoltschnittstellen 7 sind parallel oder in Reihe verschaltet und mit einem Leistungsnetz 10 des Nutzfahrzeugs verbunden oder verbindbar. Das Leistungsnetz 10 kann ein Hochvoltbordnetz des Nutzfahrzeugs umfassen. Ein elektrischer Antrieb des Nutzfahrzeugs ist zur Entnahme der im Energiespeichersystem 1 gespeicherten Energie und/oder zum Laden, z. B. bei einem Rekuperationsvorgang, des Energiespeichersystems 1 mit dem Leistungsnetz 10 verbunden, welches eine Nennspannung von mehreren hundert Volt aufweist.

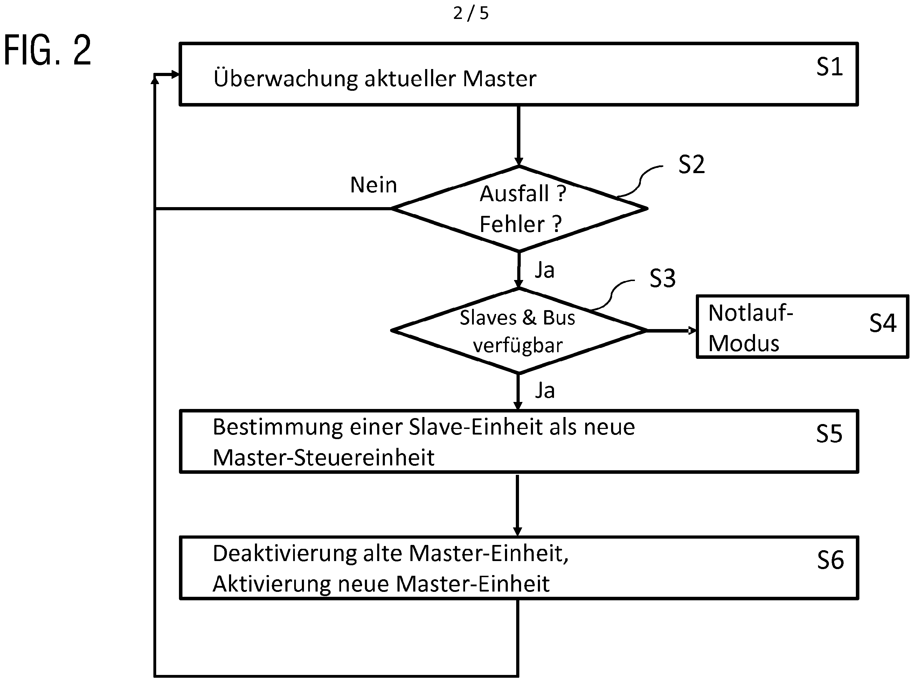

Das Energiespeichersystem 1 ist ausgeführt, nach Erfüllung einer Überwachungsbedingung, die angibt, dass die Master-Steuereinrichtung 3-1 nicht mehr ordnungsgemäß arbeitet, eine der Slave-Steuereinrichtungen 3-2 als neue Master-Steuereinrichtung zu aktivieren. Figur 2 zeigt hierzu beispielhaft ein Betriebsverfahren für das Energiespeichersystem, mit dem ein Ausfall der Master-Steuereinrichtung 3-1 kompensiert werden kann.

Im Betrieb des Energiespeichersystems 1 erfolgt in Schritt S1 eine Überwachung der aktuellen Master-Steuereinrichtung. Im Betriebszustand, der in Figur 1 dargestellt ist, ist die aktuelle Master-Steuereinrichtung die Steuereinrichtung 3-1. Bei der Überwachung in Schritt S1 wird überprüft, ob die Master-Steuereinrichtung 3-1 ordnungsgemäß arbeitet. Die Überwachung erfolgt fortlaufend, bis eine Fehlfunktion, z. B. ein Ausfall, des Energiespeichers 2-1 der aktuellen Master-Steuereinrichtung erkannt wird (Schritt S2). Die Master-Steuereinrichtung ist eingerichtet, bei einer Fehlfunktion des Energiespeichers 2-1 eine Fehlernachricht auf den CAN-Bus 9 auszugeben. Im Falle einer Fehlfunktion des Energiespeichers 2-1 wird dieser automatisch deaktiviert, da die Energiespeicher eigensicher ausgeführt sind.

Die Slave-Steuereinrichtungen sind ausgebildet, die CAN-Botschaften des CAN-Busses 9 zu überwachen. Eine Fehlfunktion des Energiespeichers der Master-Steuereinrichtung bzw. eine Fehlernachricht der Master-Steuereinrichtung kann somit durch die Slave-Steuereinrichtungen durch das Mitlesen erkannt werden. Ferner kann durch das Mitlesen durch die Slave-Steuereinrichtungen erkannt werden, falls die Bus-Kommunikation der Master-Steuereinrichtung unterbrochen ist, nämlich durch Ausbleiben der Daten oder Nachrichten der aktuellen Master-Steuereinrichtung 3-1.

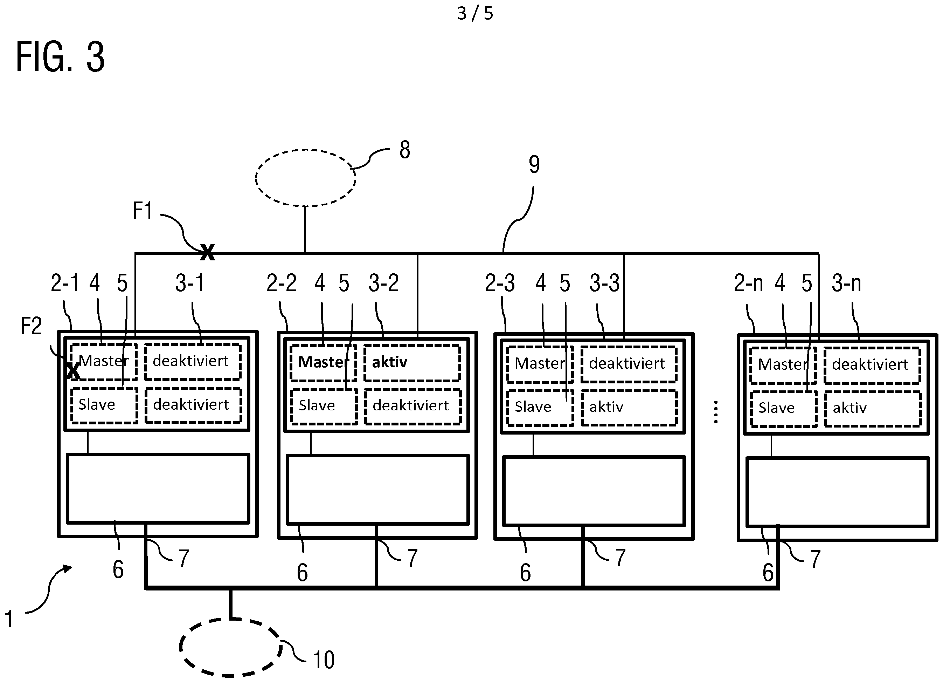

In Figur 3 ist stark schematisiert das Auftreten solcher Fehlersituation der Master-Steuereinrichtung 3-1 dargestellt. Mit dem Bezugszeichen F1 ist lediglich schematisch dargestellt, dass eine Fehlfunktion der CAN-Kommunikation der bisherigen Master-Steuereinheit 3-1 vorliegt. Mit dem Bezugszeichen F2 ist eine weitere mögliche Fehlfunktion bezeichnet, die aus einer internen Fehlfunktion des Energiespeichers 2-1 resultiert.

Falls somit in Schritt S2 ein Ausfall oder zumindest eine Fehlfunktion der aktuellen Master-Steuereinrichtung erkannt wird, wird anschließend Schritt S3 ausgeführt, wobei zunächst geprüft wird, ob Energiespeicher vorhanden sind, die noch ordnungsgemäß arbeiten, und ob die CAN-Kommunikation mit diesen Energiespeichern fehlerfrei funktioniert.

Ergibt die Prüfung in Schritt S3, dass auch unter den Energiespeichern, deren Steuereinrichtungen bisher als Slave fungierten, keiner vorhanden ist, der fehlerfrei arbeitet, oder dass die CAN-Kommunikation fehlerhaft ist, wird Schritt S4 ausgeführt. Hierbei werden alle Steuereinrichtungen 3-1, 3-2, 3-3, 3-n, sowohl die des Masters als auch die der Slaves, deaktiviert. Ferner werden alle Energiespeicher bis auf einen deaktiviert, wobei der eine nicht deaktivierte Energiespeicher für einen Notlaufmodus genutzt wird, bei dem eine sogenannte Limp-Home- Funktion aktiviert wird.

Sind jedoch Steuereinrichtungen mit intakter Bus-Kommunikation vorhanden, z. B. wenn die Fehlfunktion nur den Energiespeicher 2-1 mit der aktuellen Master-Steuereinrichtung 3-1 betrifft, wird in Schritt S5 zunächst bestimmt, welche der Steuereinrichtungen, die bisher als Slave-Steuereinrichtung aktiviert war, als neue Master-Steuereinheit dienen soll. Eine Möglichkeit hierfür ist, die Anordnung der Energiespeicher, deren Steuereinrichtung bisher als Slave-Steuereinrichtung aktiviert ist, der Reihe nach durchzuprüfen. Sobald ein Energiespeicher mit Steuereinrichtung ermittelt wird, der fehlerfrei arbeitet, wird dessen Steuereinrichtung ausgewählt, die neue Master-Steuereinrichtung zu sein. Im vorliegenden Beispiel ist dies die Steuereinrichtung 3-2.

In Schritt S5 wird dann die bisherige Master-Steuereinrichtung 3-1 deaktiviert und die Steuereinrichtung 3-2 als neuer Master aktiviert. Wie in Figur 3 zu erkennen ist, wird hierzu die Master Funktionalität 4 in der Steuereinrichtung 3-2 aktiviert und die Slave-Funktionalität 5 deaktiviert. Die Steuereinrichtungen 2-3 bis 2-n bleiben weiterhin als Slave-Steuereinrichtungen aktiviert. Mit dem erfindungsgemäßen Betriebsverfahren kann somit ein Ausfall einer Master-Steuereinrichtung quasi in Echtzeit kompensiert werden, indem eine gespiegelte Master-Funktionalität in einem anderen Energiespeicher aktiviert wird.

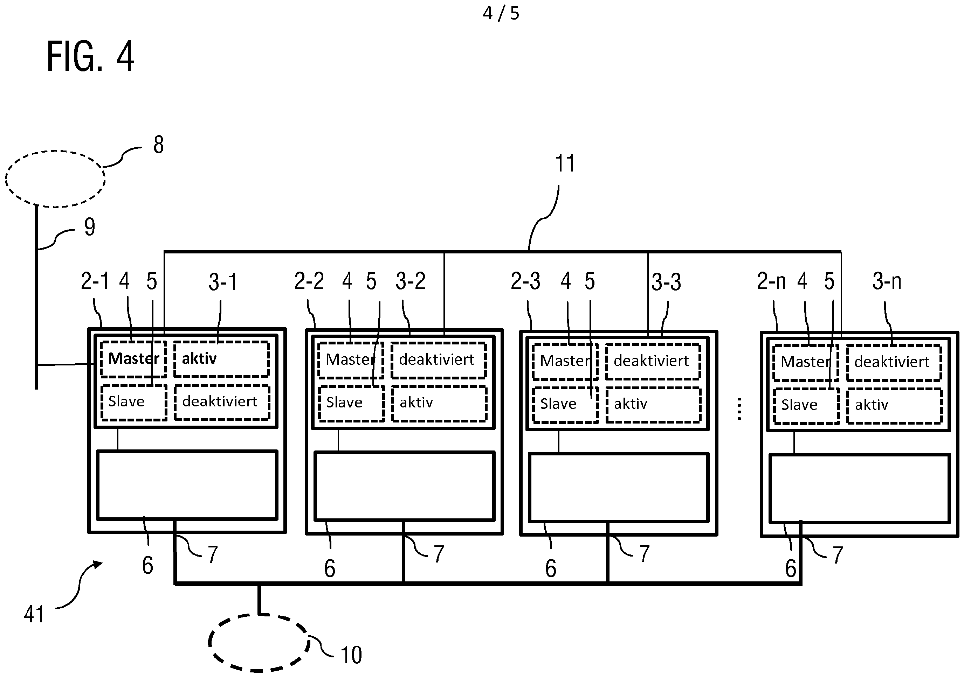

Figur 4 zeigt ein schematisches Blockschaltbild eines zweiten Ausführungsbeispiels eines Energiespeichersystems 41 für ein Nutzfahrzeug. Dieses Ausführungsbeispiel unterscheidet sich von dem vorstehend beschriebenen Ausführungsbeispiel dadurch, dass eine andere Bus-Architektur für das Energiespeichersystem verwendet wird.

Im Beispiel der Figur 4 sind die Steuereinrichtungen 3-1, 3-2, 3-3, 3-n der Energiespeicher 2-1, 2-2, 2-3, 2-n untereinander mit einem separaten CAN-Bus 11 verbunden, der im Wesentlichen nur für die Kommunikation zwischen den Energiespeichern des Energiespeichersystems 41 dient. Der erste Energiespeicher 2-1 des Energiespeichersystems weist ferner eine Schnittstelle zu dem Fahrzeug-CAN-Bus 9 auf, auf den die aggregierten Systemsignale der Master-Steuereinrichtung ausgegeben werden und über den Systemanfragen von dem Fahrzeugnetz 8 an die Master-Steuereinrichtung 3-1 des Energiespeichersystems übertragen werden.

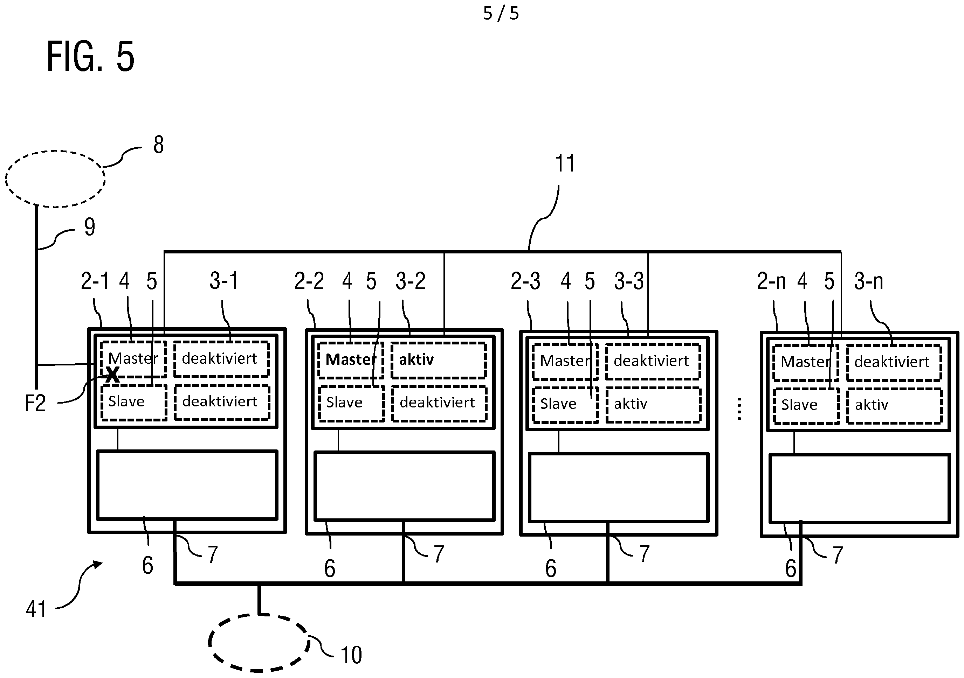

In einer ersten Variante der Ausführungsform der Figur 4 weisen auch alle weiteren Energiespeicher 2-2, 2-3, 2-n eine entsprechende Schnittstelle (nicht in Figur 4 dargestellt) zum Fahrzeug-CAN-Bus 9 auf, über die die Slave-Steuereinrichtungen 3-2, 3-3, 3-n die CAN-Botschaften für die und von der Master-Steuereinrichtung 3-1 mitlesen. Das Verfahren zur Überwachung der Master-Funktionalität erfolgt wie in Figur 2 beschrieben. Figur 5 zeigt eine Situation, bei der nach Auftreten eines Problems in der bisherigen Master-Steuereinrichtung 2-1 diese anschließend deaktiviert wurde und stattdessen die Steuereinrichtung 2-2 als neue Master-Steuereinrichtung aktiviert wurde.

In einer zweiten Ausführungsform der Figur 4 weisen alle weiteren Energiespeicher 2-2, 2-3, 2-n keine direkte Schnittstelle zum Fahrzeug-CAN-Bus 9 auf, über die die Slave-Steuereinrichtungen 3-2, 3-3, 3-n die CAN-Botschaften für die und von der Master-Steuereinrichtung 3-1 mitlesen könnten. Bei dieser Ausführung ist diejenige Steuereinrichtung 2-1, die eine direkte Schnittstelle zum Fahrzeug-CAN-Bus 9 hat, ferner eingerichtet, alle CAN-Botschaften für die Master-Steuereinrichtung 3-1 auf den CAN-Bus 11 weiterzuleiten und alle CAN-Botschaften der jeweils aktuellen Master-Steuereinrichtung von dem CAN-Bus 11 auf den Fahrzeug-CAN-Bus 9 weiterzuleiten. Dieses Weiterleiten erfolgt unabhängig davon, ob die Master-Funktionalität 4 in der ersten Steuereinrichtung 2-1 aktiviert oder deaktiviert ist. Das Verfahren zur Überwachung der Master-Funktionalität erfolgt wie in Figur 2 beschrieben. Betrifft ein Fehlerfall in der Master-Steuereinrichtung 2-1 jedoch auch die CAN-Kommunikation zum Fahrzeug-CAN-Bus 9 und/oder die Weiterleitungsfunktion zwischen Fahrzeug-CAN-Bus 9 und CAN-Bus 11, kann eine der Steuereinrichtungen 3-2, 3-3, 3-n die bisher als Slave-Steuereinrichtungen aktiviert waren, nicht als neue Master-Steuereinrichtung aktiviert werden. In diesem Fall wird auf einen Notlaufmodus gemäß Schritt S4 geschaltet.

Obwohl die Erfindung unter Bezugnahme auf bestimmte Ausführungsbeispiele beschrieben worden ist, ist es für einen Fachmann ersichtlich, dass verschiedene Änderungen ausgeführt werden können ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Energiespeichersystem
- 2: Energiespeicher
- 3: Steuereinrichtung
- 4: Master-Funktionalität
- 5: Slave-Funktionalität
- 6: Verbund aus Energiespeicherzellen
- 7: Hochvoltschnittstelle
- 8: Funktionsnetz
- 9: Fahrzeug-CAN-Bus
- 10: Leistungsnetz
- 11: CAN-Bus
- 41: Energiespeichersystem

## Patentansprüche

1. Betriebsverfahren für ein Energiespeichersystem eines Kraftfahrzeugs,
wobei das Energiespeichersystem (1) mehrere elektrische Energiespeicher (2-1, 2-2, 2-3, 2-n) aufweist und jeder der Energiespeicher (2-1, 2-2, 2-3, 2-n) eine Energiespeichersteuereinrichtung (3-1, 3-2, 3-3, 3-n) zum Steuern des Betriebs und Überwachen des Zustands des jeweiligen Energiespeichers aufweist;
wobei die Energiespeichersteuereinrichtungen (3-1, 3-2, 3-3, 3-n) nach dem Master-Slave-Prinzip miteinander gekoppelt sind, derart,
wobei eine der Energiespeichersteuereinrichtungen (3-1, 3-2, 3-3, 3-n) als Master-Steuereinrichtung (3-1) eingerichtet ist, die zum Steuern des Betriebs und Überwachen des Zustands des Energiespeichersystems (1), welches die Gesamtheit der mehreren elektrischen Energiespeicher (2-1, 2-2, 2-3, 2-n) umfasst, eingerichtet ist, und
wobei die restlichen Energiespeichersteuereinrichtungen als Slave-Steuereinrichtungen (3-2, 3-3, 3-n) eingerichtet sind, die jeweils Daten zu mindestens einem Betriebszustand ihres zugeordneten Energiespeichers an die Master-Steuereinrichtung (3-1) weiterleiten und Steuersignale von der Master-Steuereinrichtung (3-1) empfangen,
wobei die Master-Steuereinrichtung (3-1) ausgeführt ist, jeweils Daten zu mindestens einem Betriebszustand von den Slave-Steuereinrichtungen (3-2, 3-3, 3-n) zu empfangen und Steuersignale für diese abzusetzen,
wobei die Funktionalität (4) einer Master-Steuerung in zumindest zwei der Energiespeichereinheiten implementiert ist und jeweils zur Ausführung aktivierbar und deaktivierbar ist, wobei das Betriebsverfahren umfasst:
Überwachen eines Betriebs der Master-Steuereinrichtung (3-1); und
Aktivieren einer der Slave-Steuereinrichtungen (3-2, 3-3, 3-n), in der die Funktionalität (4) der Master-Steuerung implementiert ist, als neue Master-Steuereinrichtung, falls die Überwachung ergibt, dass die Master-Steuereinrichtung (3-1) nicht mehr ordnungsgemäß arbeitet;
**dadurch gekennzeichnet, dass** diejenigen als Slave-Steuereinrichtungen (3-2, 3-3, 3-n) eingerichteten Steuereinrichtungen, in denen die Funktionalität (4) einer Master-Steuerung implementiert, aber deaktiviert ist, eingerichtet sind, Signale für die und/oder von der Master-Steuereinrichtung (3-1) mitzulesen.

2. Betriebsverfahren nach Anspruch 1, wobei die Überwachung ergibt, dass die Master-Steuereinrichtung (3-1) nicht mehr ordnungsgemäß arbeitet, falls im Betrieb des Energiespeichersystems (1) zumindest eine der folgenden Bedingungen vorliegt:
a) die Master-Steuereinrichtung (3-1) gibt eine vorbestimmte Fehlermeldung auf einen Bus, insbesondere einen CAN-Bus (9) aus, über den die Energiespeichersteuereinrichtungen miteinander verbunden sind,
b) die Slave-Steuereinrichtungen (3-2, 3-3, 3-n) erhalten länger als eine vorbestimmte Zeit keine Steuersignale von der Master-Steuereinrichtung (3-1) und
c) die Master-Steuereinrichtung (3-1) gibt länger als eine vorbestimmte Zeit keine Ausgabedaten betreffend den Zustand des Energiespeichersystems (1) aus.

3. Betriebsverfahren nach Anspruch 2, wobei diejenige Slave-Steuereinrichtung (3-2), die nach der Erfüllung der Überwachungsbedingung als neue Master-Einheit aktiviert wird, gemäß einer vorbestimmten Reihenfolge oder vorbestimmten Kriterien aus den Slave-Steuereinrichtungen (3-2, 3-3, 3-n), in denen die Funktionalität (4) der Master-Steuerung implementiert ist, ausgewählt wird.

4. Betriebsverfahren nach einem der vorhergehenden Ansprüche 2 oder 3, wobei, falls nach Erfüllung der Überwachungsbedingung keine der Slave-Steuereinrichtungen als Master-Steuereinrichtung aktivierbar ist, alle bis auf einen Energiespeicher deaktiviert werden.

5. Betriebsverfahren nach einem der vorhergehenden Ansprüche, wobei vor Auswahl einer Slave-Steuereinrichtung als die neue Master-Steuereinrichtung geprüft wird, ob eine Kommunikation dieser Slave-Steuereinrichtung mit einem Datenbus, der die Energiespeichersteuereinrichtungen miteinander verbindet, fehlerfrei funktioniert.

6. Betriebsverfahren nach einem der vorhergehenden Ansprüche, wobei, falls die ausgewählte Slave-Steuereinrichtung nicht erfolgreich als Master-Steuereinrichtung aktiviert werden konnte, eine weitere Slave-Steuereinrichtung gemäß der vorbestimmten Reihenfolge ausgewählt wird.

7. Betriebsverfahren nach einem der vorhergehenden Ansprüche, wobei die einzelnen Energiespeicher (2-1, 2-2, 2-3, 2-n) baugleich ausgeführt sind und/oder jeweils ein Energiespeichergehäuse aufweisen, in dem die Energiespeichersteuerung und die mehreren parallel und/oder seriell miteinander verschalteten und zu einem Zellenverbund (6) zusammengefassten Einzelzellen angeordnet sind.

8. Betriebsverfahren nach einem der vorhergehenden Ansprüche, wobei ein erster Datenbus die Energiespeichersteuereinrichtungen des Energiespeichersystems miteinander verbindet und wobei das Energiespeichersystem eine Fahrzeugschnittstelle zu einem zweiten Datenbus, der als Fahrzeugbus ausgebildet ist, aufweist.

9. Energiespeichersystem für ein Kraftfahrzeug, umfassend
mehrere elektrische Energiespeicher (2-1, 2-2, 2-3, 2-n), wobei jeder der Energiespeicher eine Energiespeichersteuereinrichtung (3-1, 3-2, 3-3, 3-n) zum Steuern des Betriebs und Überwachen des Zustands des jeweiligen Energiespeichers aufweist;
wobei die Energiespeichersteuereinrichtungen (3-1, 3-2, 3-3, 3-n) nach dem Master-Slave-Prinzip miteinander gekoppelt sind, derart,
wobei eine der Energiespeichersteuereinrichtungen als Master-Steuereinrichtung (3-1) eingerichtet ist, die zum Steuern des Betriebs und Überwachen des Zustands des Energiespeichersystems (1), welches die Gesamtheit der mehreren elektrische Energiespeicher (2-1, 2-2, 2-3, 2-n) umfasst, eingerichtet ist, und
wobei die restlichen Energiespeichersteuereinrichtungen als Slave-Steuereinrichtungen (3-2, 3-3, 3-n) eingerichtet sind, die jeweils Daten zu mindestens einem Betriebszustand ihres zugeordneten Energiespeichers an die Master-Steuereinrichtung (3-1) weiterleiten und Steuersignale von der Master-Steuereinrichtung (3-1) empfangen,
wobei die Master-Steuereinrichtung (3-1) ausgeführt ist, jeweils Daten zu mindestens einem Betriebszustand von den Slave-Steuereinrichtungen (3-2, 3-3, 3-n) zu empfangen und Steuersignale für diese abzusetzen,
wobei die Funktionalität (4) einer Master-Steuerung in zumindest zwei der Energiespeichereinheiten implementiert ist und jeweils zur Ausführung aktivierbar und deaktivierbar ist,
wobei das Energiespeichersystem (1) ausgeführt ist, nach Erfüllung einer Überwachungsbedingung, die angibt, dass die Master-Steuereinrichtung (3-1) nicht mehr ordnungsgemäß arbeitet, eine der Slave-Steuereinrichtungen (3-2), in der die Funktionalität der Master-Steuerung implementiert ist, als neue Master-Steuereinrichtung zu aktivieren;
**dadurch gekennzeichnet, dass** diejenigen als Slave-Steuereinrichtungen (3-2, 3-3, 3-n) eingerichteten Steuereinrichtungen, in denen die Funktionalität (4) einer Master-Steuerung implementiert, aber deaktiviert ist, eingerichtet sind, Signale für die und/oder von der Master-Steuereinrichtung (3-1) mitzulesen.

10. Kraftfahrzeug, insbesondere Nutzfahrzeug, mit einem Energiespeichersystem (1) nach Anspruch 9.

## Claims

1. Operation method for an energy storage system of a motor vehicle,
wherein the energy storage system (1) comprises several electrical energy storage devices (2-1, 2-2, 2-3, 2-n) and each of the energy storage devices (2-1, 2-2, 2-3, 2-n) comprises an energy storage control device (3-1, 3-2, 3-3, 3-n) for controlling the operation and monitoring the state of the respective energy storage device;
wherein the energy storage control devices (3-1, 3-2, 3-3, 3-n) are coupled to each other according to the master-slave principle, such that
wherein one of the energy storage control devices (3-1, 3-2, 3-3, 3-n) is set as a master control device (3-1) adapted to control the operation and monitor the state of the energy storage system (1), comprising the entirety of the several electric energy storage devices (2-1, 2-2, 2-3, 2-n), and
wherein the remaining energy storage control devices are set as slave control devices (3-2, 3-3, 3-n), which each forward data on at least one operating state of their associated energy storage device to the master control device (3-1) and receive control signals from the master control device (3-1),
wherein the master control device (3-1) being configured to receive data on at least one operating state from the slave control devices (3-2, 3-3, 3-n) respectively and to transmit control signals for them,
wherein the functionality (4) of a master control is implemented in at least two of the energy storage units and is activatable and deactivatable for execution, respectively, said operation method comprising:
monitoring an operation of the master control device (3-1); and
activating one of the slave control devices (3-2, 3-3, 3-n) in which the functionality (4) of the master control is implemented as a new master control device, if the monitoring indicates that the master control device (3-1) is no longer operating properly;
**characterised in that** those control devices set up as slave control devices (3-2, 3-3, 3-n) in which the functionality (4) of a master control is implemented but deactivated are configured to read along signals for and/or from the master control device (3-1).

2. Operation method according to claim 1, wherein the monitoring reveals that the master control device (3-1) no longer operates properly, if at least one of the following conditions is met during operation of the energy storage system (1):
a) the master control device (3-1) issues a predetermined error message on a bus, in particular a CAN bus (9), via which the energy storage control devices are connected to one another,
b) the slave control devices (3-2, 3-3, 3-n) do not receive any control signals from the master control device (3-1) for longer than a predetermined time, and
c) the master control device (3-1) does not output data concerning the state of the energy storage system (1) for longer than a predetermined time.

3. Operation method according to claim 2, wherein the slave control device (3-2), which is activated as a new master unit after the monitoring condition is met is selected according to a predetermined order or predetermined criteria from the slave control devices (3-2, 3-3, 3-n) in which the functionality (4) of the master control is implemented.

4. Operation method according to any one of the preceding claims 2 or 3, wherein, if none of the slave control devices can be activated as the master control device after the monitoring condition is met, all but one energy storage device are deactivated.

5. Operation method according to any one of the preceding claims, wherein before selecting a slave control device as the new master control device, it is checked whether a communication of this slave control device with a data bus connecting the energy storage control devices to each other functions without error.

6. Operation method according to any one of the preceding claims, wherein, if the selected slave control device could not be successfully activated as a master control device, a further slave control device is selected according to the predetermined sequence.

7. Operation method according to one of the preceding claims, wherein the individual energy storage devices (2-1, 2-2, 2-3, 2-n) are of identical design and/or each have an energy storage device housing in which the energy storage device control device and the several individual cells, which are connected to each another in parallel and/or in series and are combined to form a cell assembly (6), are arranged.

8. Operation method according to one of the preceding claims, wherein a first data bus interconnects the energy storage control devices of the energy storage system and wherein the energy storage system has a vehicle interface to a second data bus which is designed as a vehicle bus.

9. Energy storage system for a motor vehicle, comprising
several electrical energy storage devices (2-1, 2-2, 2-3, 2-n), each of the energy storage devices having an energy storage control device (3-1, 3-2, 3-3, 3-n) for controlling the operation and monitoring the state of the respective energy storage device;
wherein the energy storage control devices (3-1, 3-2, 3-3, 3-n) are coupled to each other according to the master-slave principle, such that
wherein one of the energy storage control devices is set as a master control device (3-1) adapted to control the operation and monitor the state of the energy storage system (1) comprising the entirety of the several electrical energy storage devices (2-1, 2-2, 2-3, 2-n), and
wherein the remaining energy storage control devices are set as slave control devices (3-2, 3-3, 3-n), which each forward data on at least one operating state of their associated energy storage device to the master control device (3-1) and receive control signals from the master control device (3-1),
wherein the master control device (3-1) being configured to receive data on at least one operating state from the slave control devices (3-2, 3-3, 3-n) respectively and to transmit control signals for them,
wherein the functionality (4) of a master control is implemented in at least two of the energy storage units and is activatable and deactivatable for execution, respectively,
wherein the energy storage system (1) is adapted to activate, after a monitoring condition indicating that the master control device (3-1) is no longer operating properly is fulfilled, one of the slave control devices (3-2) in which the functionality of the master control is implemented, as a new master control device;
**characterised in that** those control devices set up as slave control devices (3-2, 3-3, 3-n) in which the functionality (4) of a master control is implemented but deactivated are configured to read along signals for and/or from the master control device (3-1).

10. Motor vehicle, in particular commercial vehicle, with an energy storage system (1) according to claim 9.

## Revendications

1. Procédé de fonctionnement pour un système accumulateur d'énergie d'un véhicule automobile,
le système accumulateur d'énergie (1) possédant plusieurs accumulateurs d'énergie (2-1, 2-2, 2-3, 2-n) et chacun des accumulateurs d'énergie (2-1, 2-2, 2-3, 2-n) possédant un dispositif de commande d'accumulateur d'énergie (3-1, 3-2, 3-3, 3-n) destiné à commander le fonctionnement et à surveiller l'état de l'accumulateur d'énergie respectif ;
les dispositifs de commande d'accumulateur d'énergie (3-1, 3-2, 3-3, 3-n) étant connectés entre eux selon le principe maître-esclave, de telle sorte que
l'un des dispositifs de commande d'accumulateur d'énergie (3-1, 3-2, 3-3, 3-n) étant conçu en tant que dispositif de commande maître (3-1), qui est conçu pour commander le fonctionnement et surveiller l'état du système accumulateur d'énergie (1), lequel comprend l'ensemble des plusieurs accumulateurs d'énergie (2-1, 2-2, 2-3, 2-n), et
les dispositifs de commande d'accumulateur d'énergie restants étant conçus en tant dispositifs de commande esclaves (3-2, 3-3, 3-n), lesquels retransmettent respectivement des données à propos d'au moins un état de fonctionnement de leur accumulateur d'énergie associé au dispositif de commande maître (3-1) et reçoivent des signaux de commande en provenance du dispositif de commande maître (3-1),
le dispositif de commande maître (3-1) étant réalisé pour recevoir respectivement des données à propos d'au moins un état de fonctionnement en provenance des dispositifs de commande esclaves (3-2, 3-3, 3-n) et déposer des signaux de commande pour ceux-ci,
la fonctionnalité (4) d'une commande maître étant mise en œuvre dans au moins deux des unités d'accumulateur d'énergie et pouvant respectivement être activée en vue de l'exécution et désactivée, le procédé de fonctionnement comprenant :
surveillance d'un fonctionnement du dispositif de commande maître (3-1) ; et
activation de l'un des dispositifs de commande esclaves (3-2, 3-3, 3-n) dans lequel est mise en œuvre la fonctionnalité (4) de la commande maître, en tant que nouveau dispositif de commande maître dans le cas où la surveillance a pour résultat que le dispositif de commande maître (3-1) ne fonctionne plus de manière conforme ;
**caractérisé en ce que** les dispositifs de commande qui sont conçus en tant que dispositifs de commande esclaves (3-2, 3-3, 3-n), dans lesquels la fonctionnalité (4) d'une commande maître est mise en oeuvre, mais est désactivée, sont conçus pour lire conjointement les signaux pour le et/ou en provenance du dispositif de commande maître (3-1).

2. Procédé de fonctionnement selon la revendication 1, la surveillance ayant pour résultat que le dispositif de commande maître (3-1) ne fonctionne plus de manière conforme dans le cas où au moins l'une des conditions suivantes est présente lors du fonctionnement du système accumulateur d'énergie (1) :
a) le dispositif de commande maître (3-1) délivre un message d'erreur prédéterminé sur un bus, notamment un bus CAN (9) par le biais desquels les dispositifs de commande d'accumulateur d'énergie sont reliés entre eux,
b) les dispositifs de commande esclaves (3-2, 3-3, 3-n) ne reçoivent pas de signal de commande en provenance du dispositif de commande maître (3-1) pendant plus longtemps qu'une durée prédéterminée et
c) le dispositif de commande maître (3-1) ne délivre pas de données de sortie concernant l'état du système accumulateur d'énergie (1) pendant plus longtemps qu'une durée prédéterminée.

3. Procédé de fonctionnement selon la revendication 2, le dispositif de commande esclave (3-2) qui est activé en tant que nouvelle unité maître après que la condition de surveillance soit remplie étant sélectionné conformément à une séquence prédéterminée ou des critères prédéterminés parmi les dispositifs de commande esclaves (3-2, 3-3, 3-n) dans lesquels la fonctionnalité (4) de la commande maître est mise en œuvre.

4. Procédé de fonctionnement selon l'une des revendications précédentes 2 ou 3, tous les accumulateurs d'énergie sauf un étant désactivés dans le cas où aucun des dispositifs de commande esclaves ne peut être activé en tant que dispositif de commande maître après que la condition de surveillance soit remplie.

5. Procédé de fonctionnement selon l'une des revendications précédentes, un contrôle étant effectué avant la sélection d'un dispositif de commande esclave en tant que nouveau dispositif de commande maître afin de vérifier si ce dispositif de commande esclave fonctionne sans erreur avec un bus de données qui relie entre eux les dispositifs de commande d'accumulateur d'énergie.

6. Procédé de fonctionnement selon l'une des revendications précédentes, un autre dispositif de commande esclave étant sélectionné conformément à la séquence prédéterminée dans le cas où l'activation du dispositif de commande esclave sélectionné en tant que dispositif de commande maître n'a pas réussi.

7. Procédé de fonctionnement selon l'une des revendications précédentes, les accumulateurs d'énergie (2-1, 2-2, 2-3, 2-n) individuels étant réalisés de construction identique et/ou possédant respectivement un boîtier d'accumulateur d'énergie dans lequel sont disposées la commande d'accumulateur d'énergie et les plusieurs cellules individuelles, connectées en parallèle et/ou en série les unes aux autres et assemblées en un groupe de cellules (6).

8. Procédé de fonctionnement selon l'une des revendications précédentes, un premier bus de données reliant entre eux les dispositifs de commande d'accumulateur d'énergie du système accumulateur d'énergie et le système accumulateur d'énergie possédant une interface de véhicule vers un deuxième bus de données, lequel est réalisé sous la forme d'un bus de véhicule.

9. Système accumulateur d'énergie pour un véhicule automobile, comprenant
plusieurs accumulateurs d'énergie (2-1, 2-2, 2-3, 2-n), chacun des accumulateurs d'énergie (2-1, 2-2, 2-3, 2-n) possédant un dispositif de commande d'accumulateur d'énergie (3-1, 3-2, 3-3, 3-n) destiné à commander le fonctionnement et à surveiller l'état de l'accumulateur d'énergie respectif ;
les dispositifs de commande d'accumulateur d'énergie (3-1, 3-2, 3-3, 3-n) étant connectés entre eux selon le principe maître-esclave, de telle sorte que
l'un des dispositifs de commande d'accumulateur d'énergie étant conçu en tant que dispositif de commande maître (3-1), qui est conçu pour commander le fonctionnement et surveiller l'état du système accumulateur d'énergie (1), lequel comprend l'ensemble des plusieurs accumulateurs d'énergie (2-1, 2-2, 2-3, 2-n), et
les dispositifs de commande d'accumulateur d'énergie restants étant conçus en tant dispositifs de commande esclaves (3-2, 3-3, 3-n), lesquels retransmettent respectivement des données à propos d'au moins un état de fonctionnement de leur accumulateur d'énergie associé au dispositif de commande maître (3-1) et reçoivent des signaux de commande en provenance du dispositif de commande maître (3-1),
le dispositif de commande maître (3-1) étant réalisé pour recevoir respectivement des données à propos d'au moins un état de fonctionnement en provenance des dispositifs de commande esclaves (3-2, 3-3, 3-n) et déposer des signaux de commande pour ceux-ci,
la fonctionnalité (4) d'une commande maître étant mise en œuvre dans au moins deux des unités d'accumulateur d'énergie et pouvant respectivement être activée en vue de l'exécution et désactivée,
le système accumulateur d'énergie (1) étant réalisé pour, après qu'une condition de surveillance qui indique que le dispositif de commande maître (3-1) ne fonctionne plus de manière conforme soit remplie, activer l'un des dispositifs de commande esclaves (3-2, 3-3, 3-n) dans lequel est mise en œuvre la fonctionnalité de la commande maître, en tant que nouveau dispositif de commande maître ;
**caractérisé en ce que** les dispositifs de commande qui sont conçus en tant que dispositifs de commande esclaves (3-2, 3-3, 3-n), dans lesquels la fonctionnalité (4) d'une commande maître est mise en oeuvre, mais est désactivée, sont conçus pour lire conjointement les signaux pour le et/ou en provenance du dispositif de commande maître (3-1).

10. Véhicule automobile, notamment véhicule utilitaire, comprenant un système accumulateur d'énergie (1) selon la revendication 9.
